# EUROPEAN PATENT APPLICATION

(11) **EP 4 333 133 A1**
(43) Date of publication of application: **06.03.2024**
(21) Application number: 22193294.0
(22) Date of filing: 31.08.2022
(51) Int. Cl.: H01M 8/04119, B60L 58/30, H01M 8/04492, H01M 8/04664, H01M 8/04828, H01M 16/00, H01M 8/04223, H01M 8/04089

(54) **A COMPUTER-IMPLEMENTED METHOD FOR ESTIMATING A STATE OF HEALTH OF A HUMIDIFIER OF A FUEL CELL SYSTEM FOR A VEHICLE**

(71) Applicant: VOLVO TRUCK CORPORATION, 405 08 Göteborg (SE)
(72) Inventor: BLOMGREN, Fredrik, 425 35 Hisings Kärra (SE); LUONG, Staffan, 504 75 Borås (SE); LINDBERG, Johan, 415 33 Göteborg (SE)
(74) Representative: Valea AB

(57) **Abstract**

The invention relates to a computer-implemented method for estimating a state of health of a humidifier (20) of a fuel cell system (1) for a vehicle (100), comprising:
- in response to determining that a predefined condition for vehicle onboard measurements is fulfilled:
- performing (S1) step response measurements, comprising measuring parameters related to dynamic response of water mass transport and heat transport of the humidifier when step increases of the fuel cell system (1) are performed, wherein a step increase is indicative of an instantaneous power increase of the fuel cell system (1), and
- fitting (S2) the measured parameters in a humidifier aging model and therefrom estimating (S3) the state of health of the humidifier (20). The invention also relates to a fuel cell system (1), a vehicle (100), a computer program and a computer readable medium.

## Description

### TECHNICAL FIELD

The invention relates to a computer-implemented method for estimating a state of health of a humidifier of a fuel cell system for a vehicle. The invention also relates to a fuel cell system, a vehicle, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as wheel loaders, excavators, dump-trucks, buses, marine vessels and passenger cars.

### BACKGROUND

A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles.

Typically, a fuel cell system for a vehicle comprises a fuel cell stack comprising a plurality of fuel cells. In addition, the fuel cell system typically comprises a turbo and a humidifier. The turbo comprises a turbine and a compressor which are drivingly connected. During use of the fuel cell system, an inlet airflow to the fuel cell stack flows thereto via the compressor and the humidifier. The inlet airflow delivers the above-mentioned oxidizing agent to the fuel cell(s). An outlet airflow from the fuel cell stack flows therefrom via the humidifier and the turbine until it exits into an external environment. Some or all of the outlet airflow may bypass the humidifier at certain occasions. During use, the humidifier transfers water, or water and heat, from the outlet airflow to the inlet airflow.

A fuel cell system for a vehicle is often used in combination with an electrical energy storage system, such as a battery pack comprising lithium-ion cells. The requested power for the vehicle can be delivered in combination by the fuel cell system and the electrical energy storage system or by one of the systems, depending on different factors. For example, the distribution of power from each system may be optimized in dependence on energy efficiency.

Even though it is known to use a fuel cell system for powering a vehicle as e.g. mentioned in the above, there is still a strive to develop further improved fuel cell system technology.

### SUMMARY

In view of the above, an object of the invention is to provide a computer-implemented method for estimating a state of health of a humidifier of a fuel cell system which at least partly alleviates one or more drawbacks of the prior art, or which at least provides a suitable alternative. Yet further objects of the invention are to provide a fuel cell system, a vehicle, a computer program and/or a computer readable medium, which alleviate at least one or more drawbacks of the prior art, or which at least provide suitable alternatives.

According to a first aspect, the object is achieved by a computer-implemented method according to claim 1.

Hence, there is provided a computer-implemented method for estimating a state of health of a humidifier of a fuel cell system for a vehicle, comprising:
- in response to determining that a predefined condition for vehicle onboard measurements is fulfilled:
- performing step response measurements, comprising measuring parameters related to dynamic response of water mass transport and heat transport of the humidifier when step increases of the fuel cell system are performed, wherein a step increase is indicative of an instantaneous power increase of the fuel cell system, and
- fitting the measured parameters in a humidifier aging model and therefrom estimating the state of health of the humidifier.

By the provision of a method as disclosed herein, a state of health of a humidifier of a fuel cell system can be determined in an efficient manner. A state of health of the humidifier as disclosed herein corresponds to a level of degradation of the humidifier, such as a level of degradation with respect to a reference. The reference may for example relate to a situation when the humidifier is new, i.e. not yet used, or at least not yet used for a long time, such as used for less than 100 operating hours. Additionally, or alternatively, the reference may relate to a previously estimated state of health of the humidifier. The present invention is based on a realization that the state of health of the humidifier can be reliably estimated by performing step response measurements when the predefined condition is fulfilled. During the step response measurements, parameters related to the dynamic response of water mass and heat transported by the humidifier from a humid side to a dry side are measured. The dynamic response is directly affected by the ageing state of the humidifier due to the decreased ability to transport water mass and heat from the humid side to the dry side. The dry side and the humid side are typically separated by a membrane, i.e. the ability of the membrane to transport water mass and heat from the humid side to the dry side may be degraded during ageing of the humidifier. It has been realized that performing step response measurements provide a reliable indication of the dynamic response ability of the humidifier. This dynamic response ability provides an estimation of the state of health of the humidifier.

In addition, by estimating the state of health of the humidifier as disclosed herein, an improved control of the operation of the fuel cell system can be achieved. For example, a power distribution during use between the fuel cell system and an electric energy storage system may be optimized in dependence on the estimated state of health of the humidifier. According to an example embodiment, the state of health of the humidifier may be estimated as disclosed herein at regular intervals during use, wherein the power distribution between the fuel cell system and the electric energy storage system is updated in dependence on the estimated state of health of the humidifier after each estimation. By way of example, it may be assumed that a degradation of the humidifier implies to increase the use of the electric energy storage system for improving the overall efficiency.

Optionally, the predefined condition corresponds to at least one of when the fuel cell system is in an idling operating state, when the fuel cell system is operated in a predefined low power mode, when the fuel cell system is ready to be turned off during a time period, when the fuel cell system is used for only driving a vehicle power take off device, and when the vehicle is at a workshop. By performing the state of health estimation during any one the above mentioned states implies that the estimation procedure will not negatively disturb the fuel cell system during normal operation, i.e. when the fuel cell system is mainly used for useful work, in particular for propulsion of the vehicle.

Optionally, the measured parameters are associated with at least one of the following: airflow, waterflow, relative humidity, pressure, air temperature and water temperature. The measured airflow may be a measured airflow through the humidifier, a measured airflow upstream and/or downstream of the humidifier, at an air feed side and/or air exhaust side of the fuel cell. The measured waterflow may be a measured waterflow upstream and/or downstream of the humidifier, at an air feed side and/or air exhaust side of the fuel cell. The measured relative humidity may be a measured relative humidity upstream and/or downstream of the humidifier, at an air feed side and/or air exhaust side of the fuel cell. The term relative humidity, or relative air humidity, is known in the art, and may be defined as moisture content, i.e. water vapor, of the air, and may be expressed as a percentage of the amount of moisture that can be retained by the air at a given temperature and pressure without condensation. The measured pressure may be a measured pressure upstream and/or downstream of the humidifier, at an air feed side and/or air exhaust side of the fuel cell. The measured air temperature may be a measured air temperature upstream and/or downstream of the humidifier, at an air feed side and/or air exhaust side of the fuel cell. The measured water temperature may be a measured water temperature upstream and/or downstream of the humidifier, at an air feed side and/or air exhaust side of the fuel cell.

Optionally, the fuel cell system comprises a bypass valve for bypassing an airflow from the humidifier during use, wherein the method further comprises closing the bypass valve during the step response measurements so that the entire airflow is passed through the humidifier. Thereby, a more reliable state of health estimation can be achieved. More particularly, closing the bypass valve so that the entire airflow is passed through the humidifier implies that the humidifier will be working at a higher more demanding level. A degradation of the humidifier is more likely observed when the humidifier is working at a higher more demanding level.

Optionally, the method further comprises using an excess power from the fuel cell system as a result of the step response measurements for charging an electrical energy storage system, EESS, associated with the fuel cell system. Thereby, unnecessary energy waste as a consequence of the state of health estimation can be reduced or avoided. For example, the generated energy in the EESS may be used for propulsion of the vehicle and/or for driving any other auxiliary load of the vehicle.

Optionally, the humidifier aging model is a model which models the humidifier in accordance with the first law of thermodynamics for open systems. For example, a model may be provided which models the ability of the humidifier, e.g. the ability of the above mentioned membrane of the humidifier, to transport water mass and heat from the humid side to the dry side. As such, by way of example, the humidifier may be modelled as two parts, a first part being a volume with dry air and a second part being a volume with wet air, wherein water mass and heat is transported through the membrane from the second part to the first part. By fitting the measured parameters in the model, values of water mass and heat transported may be obtained, and these values may be used for estimating the state of health of the humidifier. For example, these values may be compared with a reference, as e.g. mentioned in the above, to thereby obtain a value indicative of the state of health of the humidifier. In addition, the model may include a parameter relating to a thickness of the membrane, which for example may affect the ability of the membrane to transport water mass and/or heat as a function of time.

Optionally, the method further comprises determining to replace or repair the humidifier when the estimated state of health of the humidifier is below a predefined aging threshold. Accordingly, the method may be efficiently used for determining when it is suitable to replace or repair the humidifier. This implies a cost-effective procedure where the humidifier is replaced or repaired when necessary, e.g. for maintaining the fuel cell system above a fuel cell system efficiency threshold.

Optionally, each step increase comprises a power increase of the fuel cell system which fulfils a power increase criterion. The power increase criterion may be defined as a minimum allowed power increase rate and/or a maximum allowed power increase rate. The maximum allowed power increase rate may be set so that the fuel cell system and its components are not damaged, or at least not significantly damaged so that it results in a too high degradation. The minimum allowed power increase rate may be set so that a sufficient dynamic response of the humidifier can be expected. Preferably, each step increase is configured so that a power increase rate of the fuel cell system reaches, or at least substantially reaches, the maximum allowed power increase rate.

Optionally, the method further comprises:
- updating operating constraints of the fuel cell system when the estimated state of health of the humidifier fulfils a state of health criterion.

Thereby, by updating operating constraints, the service life of the fuel cell system may be increased. For example, if the fuel cell system is used in combination with e.g. an electrical energy storage system, the operating constraints may be updated so that the electrical energy storage system is used more and/or in other operating ranges, and/or so that the fuel cell system is used less and/or in other operating ranges. As a result, service life of the combined system, i.e. the fuel cell system and the electrical energy storage system, may be increased.

The fuel cell system may be adapted to be operated with adjustable operating dynamics and/or in an adjustable operating window defining operating constraints for the fuel cell system, wherein increasing the operating dynamics and/or the operating window is associated with an increased expected degradation of the fuel cell system and wherein reducing the operating dynamics and/or the operating window is associated with a reduced expected degradation of the fuel cell system.

By operating dynamics of a system is herein meant how the operation of the system is varied over time. For example, large and/or rapid variations of an operating parameter during use represent higher operating dynamics of the system compared to a situation with smaller and/or slower variations of the operating parameter. This may also be referred to as a slew rate of the system. By an operating window is herein meant a window, or range, within which an operating parameter is during use. By way of example, an operating parameter may refer to a power output from the system. As such, operating dynamics may be defined as power dynamics of the fuel cell system, e.g. how fast the fuel cell system can go from low power to high or full power. Other non-limiting examples of operating parameters are voltage level, ampere level and power throughput. As yet another non-limiting example, an operating parameter may relate to if a shutdown of the system is allowed or not. For example, too many shutdowns of the fuel cell system may result in higher degradation.

According to a second aspect, the object is achieved by a fuel cell system according to claim 10.

Hence, there is provided a fuel cell system comprising a fuel cell and a humidifier for the fuel cell, and further comprising one or more sensors for measuring parameters related to dynamic response of water mass transport and heat transport of the humidifier during use, wherein the fuel cell system further comprises a computing unit for performing the steps of the method according to any one of the embodiments of the first aspect.

Advantages and effects of the second aspect of the invention are largely analogous to advantages and effects of the first aspect of the invention. It shall be noted that all embodiments of the second aspect of the invention are combinable with all embodiments of the first aspect of the invention, and vice versa.

The computing unit may include a microprocessor, microcontroller, programmable digital signal processor or another programmable device. The computing unit may also, or instead, include an application specific integrated circuit, a programmable gate array or programmable array logic, a programmable logic device, or a digital signal processor. Where the computing unit includes a programmable device such as the microprocessor, microcontroller or programmable digital signal processor mentioned above, the processor may further include computer executable code that controls operation of the programmable device. The computing unit may comprise embedded hardware, sometimes with integrated software. Examples of physical relationships are: shared casing and components mounted on one or several circuit boards. Further, the computing unit may be any kind of computing unit, and it may also comprise more than one computing unit, i.e. the computing unit may be configured by two or more sub-computing units, which may be provided close to each other or be separated from each other. In some embodiments, the computing unit may be denoted a computer and/or a control unit.

Optionally, the fuel cell system comprises at least one first sensor for measuring at least one of the parameters at a location downstream of the humidifier at an air feed side of the fuel cell, and/or at least one second sensor for measuring at least one of the parameters at a location downstream of the humidifier at an air exhaust side of the fuel cell. For example, at least one of relative humidity, airflow, waterflow, pressure, air and/or water temperature may be measured at said locations. These measured parameters may then be used in the humidifier aging model, e.g. for obtaining values corresponding to water mass and heat transported from the humid side to the dry side of the humidifier, which values are indicative of the state of health of the humidifier.

Optionally, the fuel cell system comprises at least one third sensor for measuring at least one of the parameters at a location upstream of the humidifier at an air feed side of the fuel cell, and/or at least one fourth sensor for measuring at least one of the parameters at a location upstream of the humidifier at an air exhaust side of the fuel cell.

According to a third aspect, the object is achieved by a vehicle according to claim 13.

Hence, there is provided a vehicle comprising the fuel cell system according to any one of the embodiments of the second aspect.

According to a fourth aspect, the object is achieved by a computer program according to claim 14.

Hence, there is provided a computer program comprising program code means for performing the steps of the method according to any one of the embodiments of the first aspect when said program is run on the computing unit of the fuel cell system according to any one of the embodiments of the second aspect.

According to a fifth aspect, the object is achieved by a computer readable medium according to claim 15.

Hence, there is provided a computer readable medium carrying a computer program comprising program code means for performing the steps of the method according to any one of the embodiments of the first aspect when said program product is run on the computing unit of the fuel cell system according to any one of the embodiments of the second aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a fuel cell system according to example embodiments of the present invention,
Fig. 2 is a side view of a vehicle according to an example embodiment of the present invention,
Fig. 3 is a flowchart of a method according to example embodiments of the present invention,
Fig. 4 shows an example of a simplified structure of a humidifier, and
Fig. 5 shows a graph for a fuel cell system representing power output as a function of time.

It shall be understood that the embodiments shown and described are exemplifying and that the invention is not limited to these embodiments. It shall also be noted that some details in the drawings may be exaggerated in order to better describe and illustrate the invention. Like reference characters throughout the drawings refer to the same, or similar, type of element unless expressed otherwise.

### DETAILED DESCRIPTION OF EXAMPLE EMBODIMENTS OF THE INVENTION

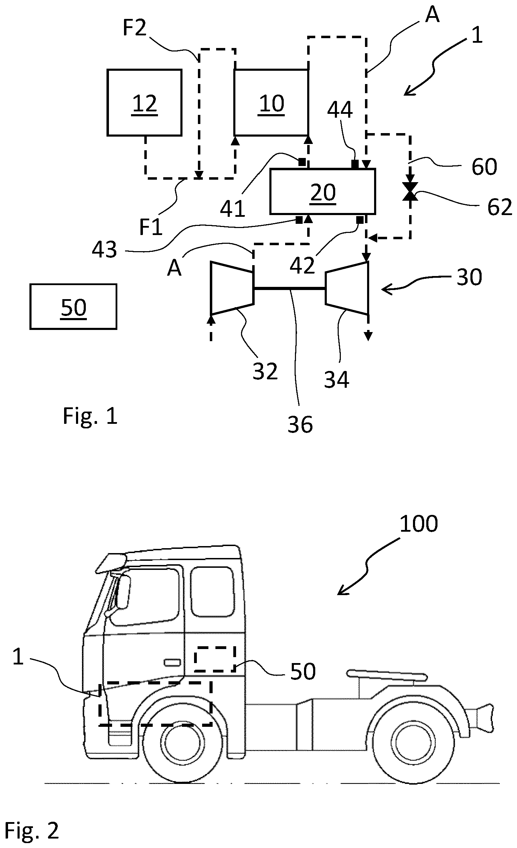

Fig. 1 depicts a schematic view of a fuel cell system 1 according to an example embodiment of the present invention. The fuel cell system 1 comprises a fuel cell 10 and a humidifier 20. The fuel cell 10 may also be denoted a fuel cell stack 10 comprising a plurality of fuel cells. As shown, the fuel cell system 1 may also comprise a turbo 30. The turbo 30 comprises a compressor 32 and a turbine 34 which are drivingly connected, in this example drivingly connected by a rotatable axle 36.

As shown in fig. 1, the fuel cell system 1 may further comprise a fuel tank 12, such as a hydrogen fuel tank. Fuel may flow in a fuel path F1 from the fuel tank 12 and into the fuel cell 10 during use. As further depicted by a flow arrow F2, excess fuel may be recirculated out from the fuel cell 10 and back into the fuel cell 10 again.

Fuel is arranged to enter at an anode side of the fuel cell 10. Air is arranged to enter at a cathode side of the fuel cell 10. The air is entered via an air path A. The air path A at least partly passes the compressor 32, the humidifier 20 and the fuel cell 10 in subsequent order. Thereafter, the air path A at least partly passes the humidifier 20 and the turbine 34. As shown, at least a portion of the airflow A may selectively bypass the humidifier 20 by use of bypass circuit 60 comprising a bypass valve 62. As shown, the bypass circuit 60 and the bypass valve 62 may be arranged downstream the fuel cell 10.

The humidifier 20 is arranged to transfer water mass and heat from air that has passed the fuel cell 10 to air which will enter the fuel cell 10.

The fuel cell system 1 may as further shown comprise a computing unit 50. The computing unit 50 may be configured to control the operation of the fuel cell system 1. The computing unit 50 may additionally or alternatively be configured to perform a method according to an example embodiment of the present invention. Additionally, or alternatively, the computing unit 50 may be configured to control opening and closing of the bypass valve 62.

As further shown in fig. 1, the fuel cell system 1 may further comprise one or more sensors 41, 42, 43, 44 for measuring parameters related to dynamic response of water mass transport and heat transport of the humidifier 20 during use. Four sensors 41, 42, 43, 44 are depicted in fig. 1. It shall however be understood that more or fewer sensors may be used. The sensors 41, 42, 43, 44 are in communicative contact with the computing unit 50, i.e. signals from the sensors 41, 42, 43, 44 are arranged to be transferred to the computing unit 50.

The fuel cell system 1 may as shown comprise at least one first sensor 41 for measuring at least one parameter at a location downstream of the humidifier 20 at an air feed side of the fuel cell 10, and/or at least one second sensor 42 for measuring at least one parameter at a location downstream of the humidifier 20 at an air exhaust side of the fuel cell 10. For example, parameters measured by the sensors 41, 42 may be indicative of airflow, relative humidity, waterflow, pressure, air temperature and water temperature.

Additionally, or alternatively, the fuel cell system 1 may as further shown comprise at least one third sensor 43 for measuring at least one parameter at a location upstream of the humidifier 20 at an air feed side of the fuel cell 10, and/or at least one fourth sensor 44 for measuring at least one parameter at a location upstream of the humidifier 20 at an air exhaust side of the fuel cell 10. For example, parameters measured by the sensors 43, 44 may be indicative of airflow, relative humidity, waterflow, pressure air temperature and water temperature.

Fig. 2 depicts a vehicle 100 according to an example embodiment of the present invention. The vehicle 100 is in this example a truck, more particularly a towing truck for towing one or more trailers (not shown). It shall however be understood that the invention is not limited to only this type of vehicle, but may be used in any other vehicle, such as a bus, a wheel loader, an excavator, a dump-truck, a passenger car and a marine vessel.

The vehicle 100 comprises a fuel cell system 1, such as the fuel cell system 1 as shown in fig. 1. The vehicle 100 may as shown also comprise a computing unit 50 as also e.g. shown in fig. 1. Accordingly, the computing unit 50 may be an onboard control unit. Additionally, or alternatively, the computing unit may be an off-board control unit, such as a remote server. As such, according to an example embodiment, the vehicle 100 may be adapted to communicate with an off-board control unit.

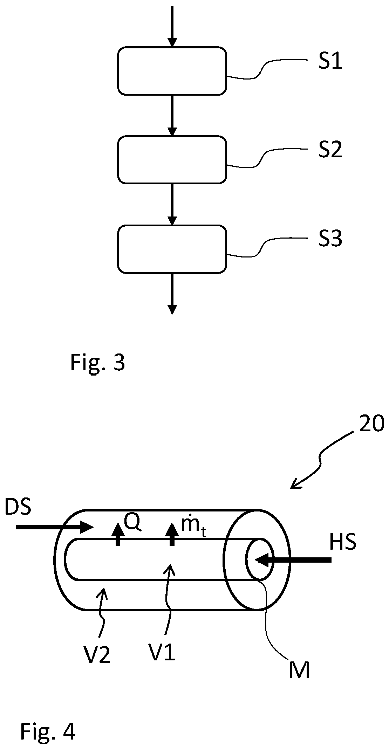

With respect to especially fig. 1 and fig. 3, representing a flowchart of the method, a computer-implemented method for estimating a state of health of a humidifier 20 of a fuel cell system 1 for a vehicle 100 according to example embodiments of the present invention will be described.

The method comprises:
- in response to determining that a predefined condition for vehicle onboard measurements is fulfilled:
   S1: performing step response measurements, comprising measuring parameters related to dynamic response of water mass transport and heat transport of the humidifier when step increases of the fuel cell system 1 are performed. The parameters may be measured by any one of the above mentioned sensors 41, 42, 43, 44. A step increase is indicative of an instantaneous power increase of the fuel cell system 1.

In addition, the method comprises:
S2: fitting the measured parameters in a humidifier aging model and therefrom,
S3: estimating the state of health of the humidifier 20.

The predefined condition may correspond to at least one of when the fuel cell system 1 is in an idling operating state, when the fuel cell system 1 is operated in a predefined low power mode, when the fuel cell system 1 is ready to be turned off during a time period, when the fuel cell system 1 is used for only driving a vehicle power take off (PTO) device, and when the vehicle 100 is at a workshop. A PTO device may for example be a device for powering an auxiliary load of the vehicle 100, such as an air conditioning system (not shown), a crane, a load bay tilting mechanism, etc. When the fuel cell system 1 is in an idling state, the vehicle 100 may be standing still while the fuel cell system 1 is turned on.

The fuel cell system 1 may comprise the above mentioned bypass valve 62 for bypassing an airflow from the humidifier 20 during use. As such, the method may further comprise closing the bypass valve 22 during the step response measurements so that the entire airflow is passed through the humidifier 20. Thereby, a more reliable state of health estimation can be achieved.

Additionally, or alternatively, the method may comprise using an excess power from the fuel cell system 1 as a result of the step response measurements for charging an electrical energy storage system (not shown), EESS, associated with the fuel cell system 1. Thereby, unnecessary energy waste as a consequence of the state of health estimation can be reduced or avoided.

The method may additionally or alternatively comprise determining to replace or repair the humidifier 20 when the estimated state of health of the humidifier 20 is below a predefined aging threshold.

Moreover, the method may additionally or alternatively comprise updating operating constraints of the fuel cell system 1 when the estimated state of health of the humidifier 20 fulfils a state of health criterion.

The humidifier aging model may be a model which models the humidifier 20 in accordance with the first law of thermodynamics for open systems. For this a simplified structure of the humidifier may be used, as e.g. shown in fig. 4. Fig. 4 represents a schematic view of the humidifier 20 which can be used for the model. The humidifier 20 comprises a dry side DS, or a dry flowpath DS, and humid side HS, or a humid flowpath HS. The humid side HS is defined by a first volume V1 and the dry side DS is defined by a second volume V2. The volumes V1, V2 are separated by a membrane M through which water mass mₜ and heat Q are transported during use of the humidifier 20. Q represents heat transferred per time unit and mₜ represents water mass transferred per time unit. By measuring one or more of the above mentioned parameters during the step response measurements, upstream and/or downstream of the of the humidifier 20, at an air feed side and/or air exhaust side of the fuel cell 10 as mentioned in the above, values for heat Q and water mass mₜ transferred per time unit may be obtained. These values may be used for estimating a state of health of the humidifier 20. For example, the values may be compared to a reference, thereby providing a state of health estimate. Furthermore, by way of example, the obtained values for heat Q and water mass mₜ transferred per time unit may be compared to the instantaneous power increase of each step increase to thereby obtain values representing the dynamic response of the humidifier 20. The obtained values for dynamic response may be compared to a reference for obtaining a value representing the estimated state of health of the humidifier 20. By way of example, the model used for the humidifier 20 for obtaining the values for heat Q and water mass mₜ transferred per time unit may be based on the humidifier model as described in the following Article: *"*Modeling and Control of Cathode Air Humidity for PEM Fuel Cell Systems", Zhiyang Liu et al, IFAC (International Federation of Automatic Control) PapersOnLine 50-1 (2017) 4751-4756, 2017. It shall however be noted that this is just an example of how to model a humidifier, and the method is not limited to only this example. In general, any model which can provide values for heat and water mass transported from the humid side to the dry side of the humidifier may be used for the state of health estimation.

According to an example embodiment, parameters indicative of relative humidity, airflow, waterflow, pressure and air and/or water temperature may be measured by the sensors 41 and 42 for obtaining values corresponding to the dynamic response of water mass transport mₜ and heat transport Q of the humidifier 20 during use. Additionally, or alternatively, as another example, parameters indicative of relative humidity, airflow, waterflow, pressure and air and/or water temperature may be measured by the sensors 43 and 44 for obtaining values corresponding to the dynamic response of water mass transport mₜ and heat transport Q of the humidifier 20 during use.

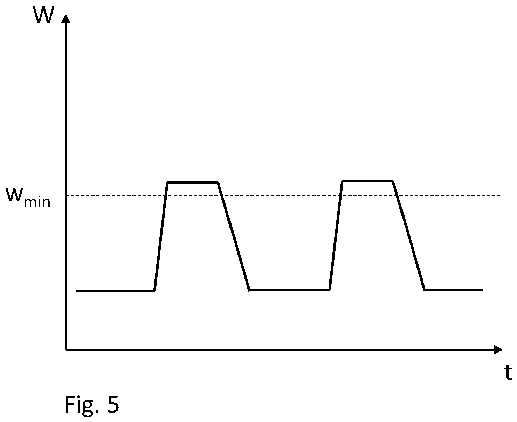

Fig. 5 is a graph which shows power level W of the fuel cell system 1 as a function of time t. The power level W is typically expressed in watts. More particularly, fig. 5 shows an example of step increases of the fuel cell system 1. In the example shown, step increases are represented by two subsequent power increases which fulfil a power increase criterion. The power increase criterion may be defined as a minimum allowed power increase rate and/or a maximum allowed power increase rate. The maximum allowed power increase rate may be set so that the fuel cell system 1 and its components are not damaged, or at least not significantly damaged so that it results in a too high degradation. The minimum allowed power increase rate may be set so that a sufficient dynamic response of the humidifier 20 can be expected. Preferably, each step increase is configured so that a power increase rate of the fuel cell system 1 reaches, or at least substantially reaches, the maximum allowed power increase rate. Additionally, or alternatively, each step increase may be configured so that the power level of the fuel cell system 1 reaches a minimum power threshold wₘᵢₙ, as indicated with the horizontal dotted line in fig. 5. The minimum power threshold may for example correspond to a power level which is at least 50, 60, 70, 80 or 90 % of a maximum allowed power level of the fuel cell system 1.

The above mentioned method may be implemented in the computing unit 50 as a computer program which comprises program code means for performing the steps of the method.

It is to be understood that the present invention is not limited to the embodiments described above and illustrated in the drawings; rather, the skilled person will recognize that many changes and modifications may be made within the scope of the appended claims.

## Claims

1. A computer-implemented method for estimating a state of health of a humidifier (20) of a fuel cell system (1) for a vehicle (100), comprising:
- in response to determining that a predefined condition for vehicle onboard measurements is fulfilled:
- performing (S1) step response measurements, comprising measuring parameters related to dynamic response of water mass transport and heat transport of the humidifier when step increases of the fuel cell system (1) are performed, wherein a step increase is indicative of an instantaneous power increase of the fuel cell system (1), and
- fitting (S2) the measured parameters in a humidifier aging model and therefrom estimating (S3) the state of health of the humidifier (20).

2. The method according to claim 1, wherein the predefined condition corresponds to at least one of when the fuel cell system (1) is in an idling operating state, when the fuel cell system (1) is operated in a predefined low power mode, when the fuel cell system (1) is ready to be turned off during a time period, when the fuel cell system (1) is used for only driving a vehicle power take off (PTO) device, and when the vehicle (100) is at a workshop.

3. The method according to any one of the preceding claims, wherein the measured parameters are associated with at least one of the following: airflow, waterflow, relative humidity, pressure, air temperature and water temperature.

4. The method according to any one of the preceding claims, wherein the fuel cell system (1) comprises a bypass valve (62) for bypassing an airflow from the humidifier (20) during use, wherein the method further comprises closing the bypass valve (22) during the step response measurements so that the entire airflow is passed through the humidifier (20).

5. The method according to any one of the preceding claims, further comprising using an excess power from the fuel cell system (1) as a result of the step response measurements for charging an electrical energy storage system, EESS, associated with the fuel cell system (1).

6. The method according to any one of the preceding claims, wherein the humidifier aging model is a model which models the humidifier (20) in accordance with the first law of thermodynamics for open systems.

7. The method according to any one of the preceding claims, wherein the method further comprises determining to replace or repair the humidifier (20) when the estimated state of health of the humidifier (20) is below a predefined aging threshold.

8. The method according to any one of the preceding claims, wherein each step increase comprises a power increase of the fuel cell system (1) which fulfils a power increase criterion.

9. The method according to any one of the preceding claims, further comprising:
- updating operating constraints of the fuel cell system (1) when the estimated state of health of the humidifier (20) fulfils a state of health criterion.

10. A fuel cell system (1) comprising a fuel cell (10) and a humidifier (20) for the fuel cell (10), and further comprising one or more sensors (41, 42, 43, 44) for measuring parameters related to dynamic response of water mass transport and heat transport of the humidifier (20) during use, wherein the fuel cell system (1) further comprises a computing unit (50) for performing the steps of the method according to any one of the preceding claims.

11. The fuel cell system (1) according to claim 10, wherein the fuel cell system (1) comprises at least one first sensor (41) for measuring at least one of the parameters at a location downstream of the humidifier (20) at an air feed side of the fuel cell (10), and/or at least one second sensor (42) for measuring at least one of the parameters at a location downstream of the humidifier (20) at an air exhaust side of the fuel cell (10).

12. The fuel cell system (1) according to any one of claims 10-11, wherein the fuel cell system (1) comprises at least one third sensor (43) for measuring at least one of the parameters at a location upstream of the humidifier (20) at an air feed side of the fuel cell (10), and/or at least one fourth sensor (44) for measuring at least one of the parameters at a location upstream of the humidifier (20) at an air exhaust side of the fuel cell (10).

13. A vehicle (100) comprising the fuel cell system (1) according to any one of claims 10-12.

14. A computer program comprising program code means for performing the steps of the method according to any one of claims 1-9 when said program is run on the computing unit of the fuel cell system (1) according to any one of claims 10-12.

15. A computer readable medium carrying a computer program comprising program code means for performing the steps of the method according to any one of claims 1-9 when said program product is run on the computing unit of the fuel cell system (1) according to any one of claims 10-12.
